# EUROPÄISCHE PATENTSCHRIFT

(11) **EP 1 457 692 B1**
(45) Veröffentlichungstag und Bekanntmachung des Hinweises auf die Patenterteilung: **27.02.2008**
(21) Anmeldenummer: 04405140.7
(22) Anmeldetag: 10.03.2004
(51) Int. Cl.: F16C 29/06, F16C 33/32, F16C 33/38, F16C 33/50, F16C 19/20, F16C 19/40

(54) **Linearbewegungsführung**
Linear motion guide
Guidage linéaire

(30) Priorität: 13.03.2003 CH 4062003
(43) Veröffentlichungstag der Anmeldung: 15.09.2004
(73) Patentinhaber: Schneeberger Holding AG, 4914 Roggwil (CH)
(72) Erfinder: Ramonat, Lutz, 4900 Langenthal (CH); Mischler, Ernst, 4914 Roggwil (CH); Schneeeberger, Hans-Martin, 4900 Langenthal (CH); Egger, Hans, 5643 Sins (CH)
(74) Vertreter: EGLI-EUROPEAN PATENT ATTORNEYS

(56) Entgegenhaltungen:
- EP-A- 1 203 892
- DE-A- 4 108 219
- DE-A- 10 049 578
- FR-A- 1 242 122
- US-A- 3 491 423

## Beschreibung

Die Erfindung betrifft eine Linearbewegungsführung für lineare Relativbewegung von zu bewegenden Objekten entlang einer Führungsachse, umfassend eine Schiene, an der zumindest eine sich parallel zur Führungsachse erstreckende Tragfläche vorgesehen ist, einen Wagen, der mit zumindest einem Wälzkörperumlauf versehen ist, in dem Wälzkörper angeordnet sind, wobei der Wälzkörperumlauf als eine in sich geschlossene Strecke zur Zirkulation der Wälzkörper ausgebildet ist, wobei die im Wälzkörperumlauf des Wagens angeordneten Wälzkörper bei einer Relativbewegung zwischen dem Wagen und der Schiene zur Übertragung von Belastungen einen Tragbereich des Wälzkörperumlaufs durchlaufen und hierbei sowohl an der Tragfläche der Schiene als auch am Wagen anliegen.

Wälzlagerlinearführungen werden in vielen Bereichen der Technik eingesetzt, in denen ein Bauteil gegenüber einem anderen Bauteil geradlinig und möglichst ohne Reibungsverluste bewegt werden soll. Ein Beispiel hierfür sind Werkzeugmaschinen. Derartige Führungen weisen als Führungskörper einen Wagen oder Schlitten auf, der über Wälzkörper, wie Kugeln, Rollen oder Nadeln, an einer Schiene geführt ist. Die Wälzkörper zirkulieren hierbei in in sich geschlossenen Wälzkörperumläufen des Wagens. Die Führungskörper weisen üblicherweise einen Tragbereich auf, in welchen die Wälzkörper an einer Tragfläche des Wagens und an der Schiene anliegen und hierdurch die zu bewegende Last tragen. Durch die Linearbewegung des Wagens gelangen die Wälzkörper aus der Tragzone in einen ersten Umlenkkanal, in dem die Wälzkörper von der Tragzone in den Rücklaufkanal überführt werden. Nach Durchlaufen des Rücklaufkanals erreichen die Wälzkörper über einen zweiten Umlenkkanal wieder die Tragzone.

Als Wälzkörper werden Kugeln oder Rollen (z.B. Zylinder-, Tonnen- oder Kegelrollen sowie Nadeln) verwendet. In den weitaus meisten Fällen werden die Schienen und Wälzkörper von Wälzlagern aus Wälzlagerstahl hergestellt. Es hat sich gezeigt, dass Nichtmetallwälzkörper, insbesondere Kugeln aus Keramik, eine dem Wälzkörperstahl vergleichbare oder sogar noch grössere Festigkeit und Steifigkeit aufweisen und somit den Bau hochpräziser Lager ermöglichen. Keramikkugeln haben jedoch den Nachteil einer nur geringen Elastizität. Bei entsprechend ungünstigen Belastungen neigen derartige Kugeln zur Beschädigung.

Aus EP 1 203 892 A2 ist eine Linearbewegungsführung bekannt, die eine gerade Schiene und einen Wagen, der über Kugeln auf Laufflächen der Schiene gestützt ist, umfasst. Zwischen den Kugeln sind jeweils Trennelemente angeordnet. Die Kugeln sind in einem am Wagen ausgebildeten, endlosen Kugelumlauf-Kanal geführt und an der Schiene und am Wagen jeweils mit Flächen in Kontakt, die aus einem Metall gebildet sind. Die Linearbewegungsführung benötigt eine Schmierung für die Kugeln und umfasst zur Realisierung der Schmierung verschiedene Hohlräume, die mit einem organischem Schmiermittel, beispielsweise Schmierfett, gefüllt und mit dem Kugelumlauf-Kanal verbunden sind.

Eine Schmierung der Wälzlager soll die Reibung zwischen Wälzkörpern und Laufbahnen verringern, damit die Reibung der Komponenten eines Wälzlagers und damit auch deren Verschleiss minimiert werden kann. Fett soll das Lager zudem gegen Verschmutzung von aussen abdichten. Schmiermittel werden auch als Korrosionsschutz für eingebaute Lager verwendet. Wälzlagerabdichtungen sollen das Schmiermittel im Wälzlager halten und das Eindringen von Verunreinigungen verhindern. Bei Linearlagern sind üblicherweise an beiden Enden Abstreifer vorgesehen, welche Schmutzpartikel von den Lagern fernhalten.

Die Zuführung des Schmiermittels und die Nachschmierung richten sich nach den jeweiligen Betriebsverhältnissen. So sind unter anderem gekapselte Lager bekannt, deren Schmiermittelvorrat für die gesamte Lebensdauer des Lagers vorhält. Bei Lagern mit eher langer Gebrauchsdauer ist jedoch eine kontinuierliche oder zeitlich begrenzte Zuführung an Schmiermitteln erforderlich, um Verluste beispielsweise an Dichtungen bzw. Abstreifern auszugleichen. Derartige Verluste treten auf, da die Abrollbewegung der Wälzkörper insbesondere auf den Laufflächen der Schiene einen feinen Schmiermittelfilm bildet. Anders als bei Radiallagern, bei denen sich das Schmiermittel in einer geschlossenen Bahn befindet, kommt es bei Linearwälzlagern zu einem Austrag von Schmiermitteln aus dem Bereich des Wagens heraus. Die an den Stirnseiten des Wagens vorgesehenen Abstreifer können in der Regel das Schmiermittel nicht vollständig von den Laufflächen abstreifen. Durch diesen kontinuierlichen Schmiermittelverlust wird der Zyklus für die Nachschmierung verkürzt bzw. eine Lebensdauerschmierung bedeutend erschwert. Nachschmieren bedeutet aber - insbesondere bei Produktionsmaschinen - unproduktive Servicezeit und zumeist den Einsatz von zusätzlichem Personal. Zudem erfordert das Nachschmieren oft spezielle Einrichtungen wie z.B. Zentralschmieranlagen und ähnliches. Schliesslich erzeugen Schmiermittel auch zusätzliche Kosten sowie Umweltbelastungen.

Auch im Zusammenhang mit Linearbewegungsführungen sind bereits sogenannte Käfige für Wälzkörper bekannt geworden. Diese haben in der Regel die Aufgabe, die Wälzkörper zueinander in gleichmässigem Abstand zu halten, um damit eine Geräuschminimierung und/oder um möglichst konstante Verschiebekräfte der Wälzkörper zu erreichen. Zudem können Käfige die Montage der Linearbewegungsführung erleichtern, da sie die Wälzkörper als ein Montageteil zusammenhalten.

Der Erfindung liegt deshalb die Aufgabe zugrunde, eine Linearbewegungsführung zu schaffen, die mit möglichst geringem Schmieraufwand eine hohe Lebensdauer erreicht. Es sollen hierbei auch Linearbewegungsführungen geschaffen werden, die auch in Anwendungsbereichen einsetzbar sind, in denen üblicherweise kein flüssiges, insbesondere kein organisches, Schmiermittel verwendet werden kann.

Diese Aufgabe wird bei einer Linearbewegungsführung erfindungsgemäss durch die Merkmale von Anspruch 1 gelöst.

Bei nur wenig oder nicht mit organischen Schmiermitteln versorgten Linearbewegungsführungen besteht stets die Gefahr von Kaltverschweissungen zwischen den Wälzkörpern und der Laufschiene, durch die eine Führung zerstört, zumindest erheblich beschädigt werden kann. Mit Trockenschmiermitteln kann diese Gefahr bei herkömmlichen Linearbewegungsführungen zwar verringert, jedoch nicht dauerhaft vermieden werden. Es hat sich nun überraschenderweise gezeigt, dass sich mit Trennmitteln zwischen Wälzkörpern in Kombination mit Wälzkörpern, die jeweils zumindest zwei unterschiedliche Werkstoffe aufweisen, diese Gefahr ganz erheblich verringern lässt. Zur Vermeidung von Kaltverschweissungen trägt zudem bei, wenn sich die Werkstoffe für die Laufflächen der Schienen und die Werkstoffe zur Ausbildung der Kontaktflächen der Wälzkörper voneinander unterscheiden. Das Gleiche gilt für die Werkstoffe der Flächen an den Wagen, mit denen die Wälzkörper in Kontakt kommen, und die Werkstoffe der Kontaktflächen der Wälzkörper. Auch diese Werkstoffe sollten sich vorzugsweise voneinander unterscheiden und so aufeinander abgestimmt sein, dass sie möglichst keine Kaltverschweissungen zulassen. Der einfachste Weg dies zu erreichen besteht darin, dass nur einer der Werkstoffe metallisch, insbesondere ein Stahl, ist.

Es ist somit möglich, die Lebensdauer der Führung auch ohne organische Schmiermittel auf ein Mass zu verlängern, wie es bei herkömmlichen reinen Stahllagern nur mit derartigen Schmiermitteln erreichbar ist. Mit der Erfindung können insbesondere nicht ausgasende Linearbewegungsführungen mit hohen Lebensdauerzyklen geschaffen werden, die für Anwendungen im Bereich der Vakuumtechnik, Reinraumtechnik oder in Bereichen, in denen vorbestimmte atmosphärische Bedingungen eingehalten werden müssen, bestens geeignet sind.

Die Wälzkörper können einen Kern aufweisen, der mit einem gegenüber einem äusseren Bereich der Wälzkörper elastischeren Werkstoff versehen ist.

Erfindungsgemäss weist dieser äussere Bereich, der die Kontaktflächen der Wälzkörper bildet, einen Werkstoff auf, der nicht zu Kaltverschweissungen mit dem Werkstoff der Laufflächen der Schiene und vorzugsweise auch des Wagens neigt. Da für Schienen üblicherweise Wälzlagerstahl verwendet wird, kommen für die äussere Schicht keramische Werkstoffe, Hartstoffe und Werkstoffe in Frage, die Trockenschmiermittel enthalten.

Für die den Kern umgebende Zone können Werkstoffe wie beispielsweise graphit- bzw. diamantartiger Kohlenstoff, Wolframkarbid, Titankarbid, Siliziumnitrid, Chromverbindungen, Wolframdisulfid und/oder Molybdändisulfid verwendet werden.

Für den im Vergleich zur umgebenden Zone vorzugsweise elastischeren Kern kommt beispielsweise Wälzlagerstahl in Frage. Der gegenüber der äusseren Schicht der Kugeln weichere bzw. elastischere Kern ermöglicht zumindest geringe elastische Verformungen der Wälzkörper, ohne dass diese zwangsläufig zu einer Beschädigung der Wälzkörper führen müssen. Diese Elastizität ermöglicht zudem eine gegenüber reinen Keramikwälzkörpern grösseren Kontaktbereich zwischen den Laufflächen der Schiene und den Wälzkörpern. Hierdurch kann die Flächenpressung reduziert werden, was wiederum zu einer deutlichen Steigerung der Lebensdauer der Führung führt. Erfindungsgemäss können somit die Werkstoffe der Wälzkörper untereinander und auch in Bezug auf den Werkstoff der Schiene aufeinander abgestimmt sein.

Es hat sich nun überraschenderweise gezeigt, dass auch Trennelemente zwischen den Wälzkörpern zu einer Erhöhung der Lebensdauer beitragen. Dies ist deshalb überraschend, weil Trennelemente zwischen den Wälzkörpern zu einer Verringerung der Anzahl an tragenden Wälzkörpern führen. Dies hat wiederum zur Folge, dass eine geringere Anzahl an tragenden Wälzkörpern die Belastungen aufzunehmen hat, was eigentlich eine Erhöhung des Verschleisses der Wälzkörper und damit eine geringere Lebensdauer hätte erwarten lassen. Dies gilt insbesondere im Hinblick auf das vorzugsweise vollständige Fehlen von organischen Schmiermitteln, wie Ölen und ähnlichem. Entgegen diesen Erwartungen zeigen jedoch trockenlaufende Linearbewegungsführungen mit Trennelementen zwischen Zwei- oder Mehrkomponenten-Wälzkörpern eine völlig ausreichende Lebensdauer. Insbesondere eine Zerstörung der Oberfläche der Wälzkörper aufgrund von Reibung zwischen benachbarten Wälzkörpern kann hierdurch sicher vermieden werden.

In einer bevorzugten Ausführungsform der Erfindung können die Trennelemente als Bestandteil einer sogenannten Wälzkörperkette ausgebildet sein und somit miteinander verbunden sein. In einer hierzu alternativen Ausgestaltung sind hingegen die Trennelemente als sich jeweils unabhängig von anderen Trennelementen zwischen jeweils zwei Wälzkörpern mitlaufenden Bauelementen ausgebildet.

Eine erfindungsgemässe Weiterbildung kann Trennelemente vorsehen, die sich im Wesentlichen nur translatorisch mit den Wälzkörpern mitbewegen. Diese Trennelemente können Distanzhalter-Drehkörper enthalten, die in den Trennelementen frei drehbar angeordnet sind. Die Distanzhalter-Drehkörper können Kontakt zu beiden Wälzkörpern haben, zwischen denen das jeweilige Trennelement angeordnet ist. Die Rotationsbewegung dieser beiden Wälzkörper versetzt durch Reibung auch den Distanzhalter-Drehkörper in Drehbewegung.

Diese bevorzugte erfindungsgemässe Ausbildung ermöglicht zum einen eine möglichst kleine Berührungsfläche zwischen den Wälzkörpern und den Trennelementen, nämlich deren Distanzhalter-Drehkörper, zu realisieren. Zum anderen liegt zwischen den Distanzhalter-Drehkörpern und den sie zwischen sich jeweils einschliessenden Wälzkörpern näherungsweise eine Bewegung vor, bei der sich sämtliche Kontaktpartner drehend bewegen. Die Distanzhalter-Kugel kann hierbei durch die Drehbewegungen beider Wälzkörper angetrieben werden, zwischen denen sie angeordnet ist. Es handelt sich hierbei im Wesentlichen um Wälzkontakte, die besonders reibungsarm sind. Zusätzlich besteht der Vorteil, dass die Distanzhalter-Kugel weder mit der Schiene noch mit dem Wagen Kontakt haben muss, der zusätzliche Reibung bedeuten würde. Insgesamt kann somit eine qualitativ sehr gute Führung der Wälzkörper bei gleichzeitig sehr geringer Reibung erreicht werden.

Weitere bevorzugte Ausgestaltungen der Erfindung ergeben sich aus den abhängigen Ansprüchen.

Die Erfindung wird anhand der in den Figuren schematisch dargestellten Ausführungsbeispiele näher erläutert; es zeigen:
- Fig. 1: eine perspektivische Darstellung einer Linearbewegungsführung mit einem teilweise gebrochen dargestellten Wagen;
- Fig. 2: Einen Längsschnitt durch den Wagen aus Fig. 1 im Bereich einer Tragzone;
- Fig. 3: eine Schnittdarstellung eines Wälzkörpers;
- Fig. 4: eine zweite Ausführungsform einer Linearbewegungsführung in einer perspektivischen Prinzipdarstellung gemäss Fig. 1;
- Fig. 5: ein Detail aus Fig. 4 in einer Schnittdarstellung;
- Fig. 6: einen Ausschnitt eines Wälzkörperumlaufs mit einem weiteren Ausführungsbeispiel für Trennelemente;
- Fig. 7: ein weiteres Ausführungsbeispiel von Trennelementen in einer Darstellung gemäss Fig. 6.

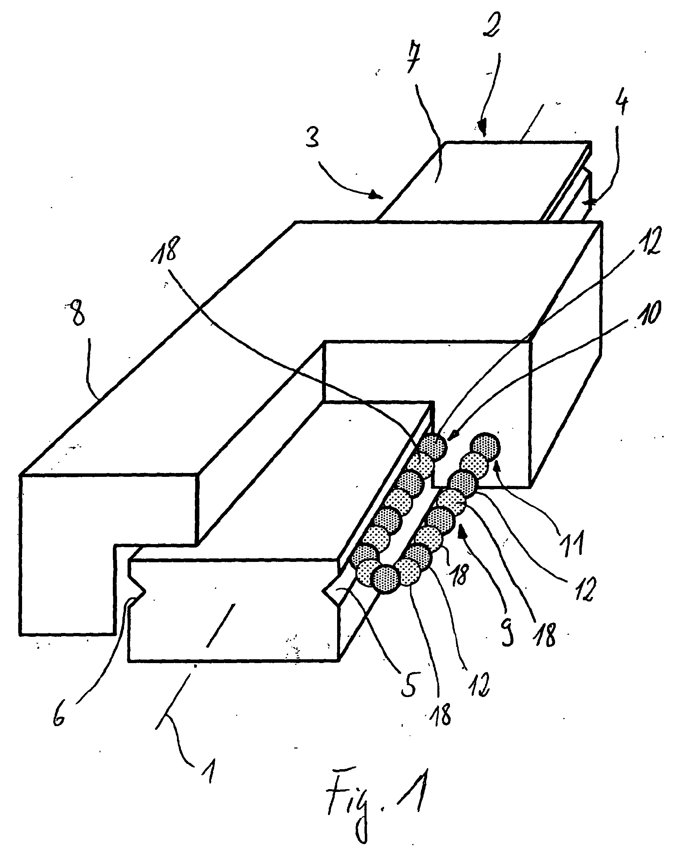

Die in Fig. 1 gezeigte Linearbewegungsführung ist mit einer entlang einer Führungsachse 1 geradlinig verlaufenden Schiene 2 versehen, die durch eine vorbestimmte Profilierung an ihren beiden Längsseiten 3, 4 jeweils zumindest eine Lauffläche 5, 6 aufweist. Eine Oberseite 7 der Schiene 2 ist im Wesentlichen eben.

Auf der Schiene 2 ist ein entlang der Führungsachse 1 längsverschiebbarer Wagen 8 angeordnet. Der im Querschnitt U-förmige Wagen 8 kann als metallischer Grundkörper mit an den beiden Stirnseiten angebrachten und jeweils nicht näher dargestellten Endkappen ausgebildet sein. Der Grundkörper und die beiden Endkappen bilden gemeinsam in Form von in sich geschlossenen Kanälen zwei Wälzkörperumläufe 9 aus. Hierzu weist der Grundkörper auf einer Innenseite von jedem Schenkel der U-Form jeweils zwei parallel zur Führungsachse 1 verlaufende Tragflächen 10 auf, die sich jeweils gegenüber einer der Laufflächen 5, 6 der Schiene 2 befinden. Die Tragflächen 10 bilden einen Tragbereich des Wagens, in dem Wälzkörper sowohl an der Tragfläche 10 als auch an der Schiene 2 anliegen und somit Belastungen vom Wagen 8 auf die Schiene 2 oder umgekehrt übertragen können. Eine jeweils parallel zur Tragfläche 10 verlaufende Ausnehmung im Grundkörper dient als Rücklaufkanal 11 des Wälzkörperumlaufs 9.

In jeder der nicht näher gezeigten Endkappen ist für jeden Wälzkörperumlauf 9 ein beispielsweise etwa halbkreisförmig verlaufender Rücklaufkanal vorhanden, der den jeweiligen Tragbereich mit dem Rücklaufkanal verbindet. Die im Ausführungsbeispiel als Kugeln 12 ausgebildeten Wälzkörper befinden sich somit in einem geschlossenen Kreislauf und können zwischen dem Tragbereich und dem Rücklaufkanal eines jeden Wälzkörperumlaufs 9 über die Umlenkkanäle zirkulieren.

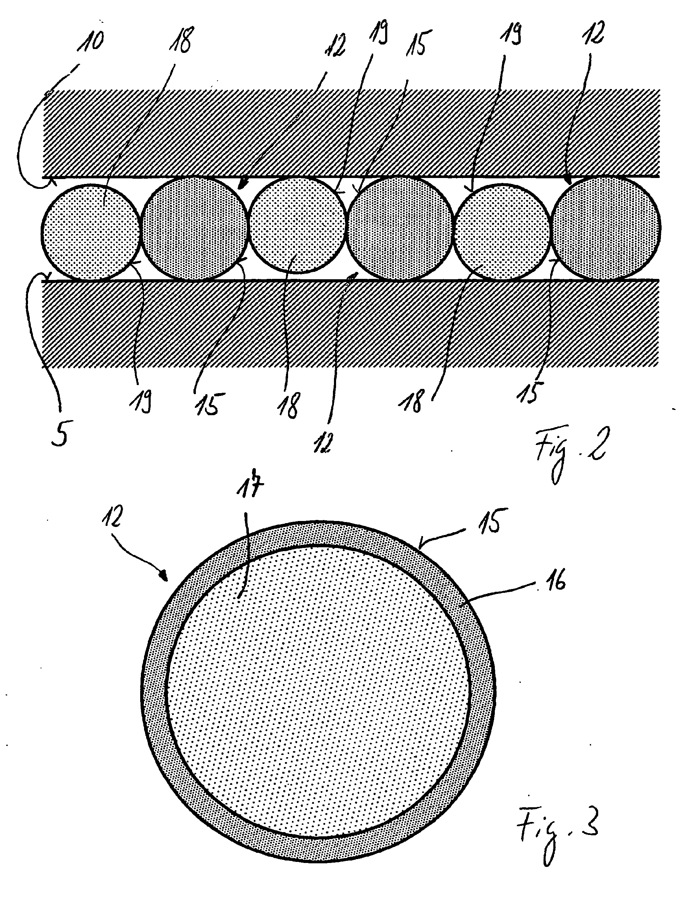

Figur 2 zeigt einen Teilschnitt durch ein Linearwälzlager gemäss einer ersten Ausführungsform der Erfindung. Zwischen der Lauffläche 5 und der Tragfläche 10 befinden sich Kugeln 12, deren Kontaktflächen 15 mit den Flächen 5, 10 in Kontakt stehen. Die Lauffläche 5 besteht in diesem Falle ganz aus Wälzlagerstahl. Alternative Ausbildungen der Laufflächen umfassen z.B. Einsatzstähle bzw. Mangan-Silizium-Stähle. Der in Fig. 3 geschnitten dargestellte und als Kugel 12 ausgebildete Wälzkörper weist eine äussere Schicht 16 aus diamantartigem Kohlenstoff auf, der besonders harte Oberflächen bzw. Kontaktflächen 15 ausbildet.

Ein Kern 17 der Wälzkörper kann aus Wälzlagerstahl bestehen. Als Wälzlagerstahl kann rostfreier oder nicht rostfreier Stahl vorgesehen sein. Beispiele hierfür sind die Stähle mit den Werkstoffnummern 1.4112 und 1.3505. Für die mit einer möglichst konstanten Dicke ausgebildete Beschichtung kann beispielsweise auch Siliziumnitrid (Si₃N₄), Wolframkarbid oder Titankarbid verwendet werden. Die Schichtdicke kann von ca. 0,1 µm bis 20 µm, vorzugsweise von 0,3 µm bis 5 µm, betragen.

Wie in Fig. 1 gezeigt ist, ist zwischen jeweils zwei tragenden Kugeln 12 jeweils ein Trennelement in Form eines sogenannten Distanzhalter-Wälzkörpers vorgesehen. Im Ausführungsbeispiel sind die Distanzhalter-Wälzkörper als Distanzhalter-Kugeln 18 ausgebildet. Die Distanzhalter-Kugeln 18 können beispielsweise PTFE aufweisen. Hierbei können sie entweder insgesamt aus diesem Werkstoff bestehen oder ihn nur an der Oberfläche bzw. ihrer Kontaktfläche 19 als Schicht aufweisen. Dieses Material hat die Eigenschaft, insbesondere mit Stählen keine Kaltverschweissungen einzugehen. Die Distanzhalter-Kugeln 18 können mit Vorteil kleiner sein als die lasttragenden (Wälzkörper-)Kugeln 12. Die alternativ auch als Zylinder ausgebildeten Distanzhalter-Wälzkörper können mit Vorteil um einen Wert von 1% bis ca. 50%, bezogen auf den Durchmesser, kleiner sein als die jeweiligen tragenden Wälzkörper, zwischen denen sie angeordnet sind.

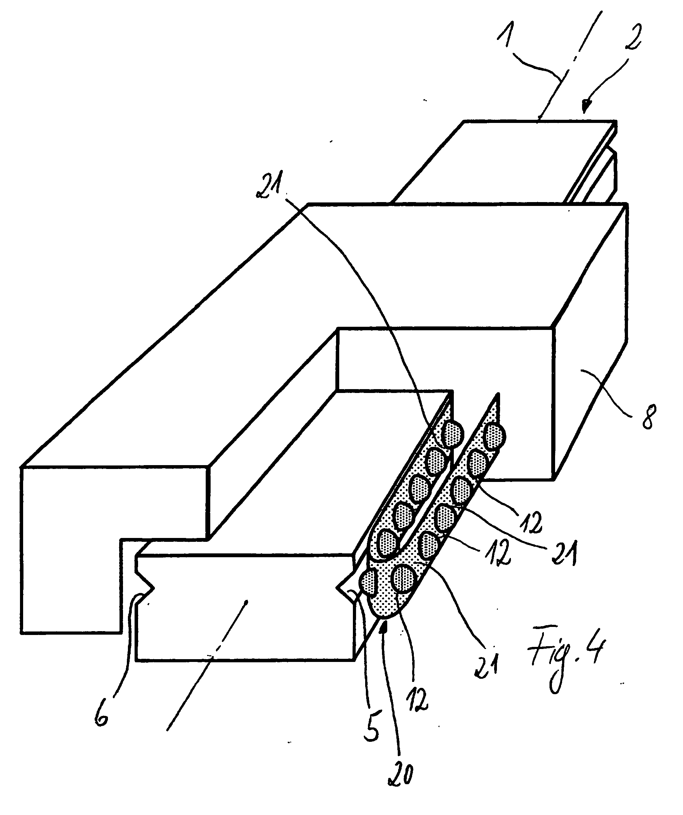

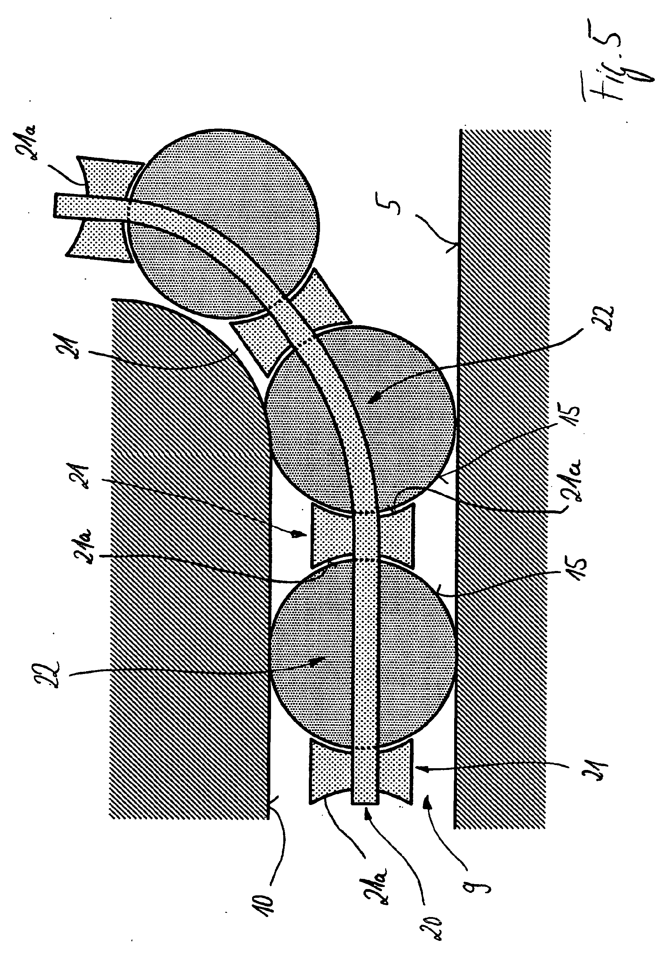

Fig. 4 und 5 zeigen eine zweite Ausführungsform eines erfindungsgemässen Linearwälzlagers. Die Schiene 2 weist als Werkstoff wiederum Metall auf, z.B. Wälzlager-, Einsatzstahl bzw. Mangan-Silizium-Stahl. Die wiederum als Kugeln 12 ausgebildeten Wälzkörper weisen einen Kern 17 aus Metall und eine äussere Schicht 16 aus Wolframkarbid auf, mit der auch die Kontaktfläche 15 gebildet wird. Die Werkstoffe der Laufflächen 5, 6 der Schiene 2 und der Wälzkörper umfassen wiederum eine erfindungsgemäss vorgesehene Materialpaarung.

Bei dem in Fig. 4 und 5 gezeigten Ausführungsbeispiel sind die einzelnen Kugeln 12 in einer ringförmig geschlossenen Kugelkette 20 angeordnet. Durch die Kugelkette 20 sind zwei aufeinanderfolgende Wälzkörper durch jeweils ein Trennelement 21 voneinander beabstandet. Als Trennelement 21 kann somit der jeweilige Abschnitt des Teils der Kugelkette verstanden werden, der sich zwischen zwei Wälzkörpern befindet. Die Trennelemente 21 sind somit durch die Kugelkette 20 miteinander verbunden. Die Trennelemente 21 sind an ihren zu den Wälzkörpern weisenden Seiten jeweils mit konkaven Flächen 21a versehen, die an die Kontaktflächen 15 der Kugeln 12 angepasst sind. Hierdurch bilden zwei aufeinanderfolgende Trennelemente 21 jeweils eine Aufnahme 22 zur Führung eines Wälzkörpers aus. Die Trennelemente 21 können aus einem Werkstoff mit möglichst niedrigem Reibbeiwert wie beispielsweise PTFE oder POM erzeugt sein.

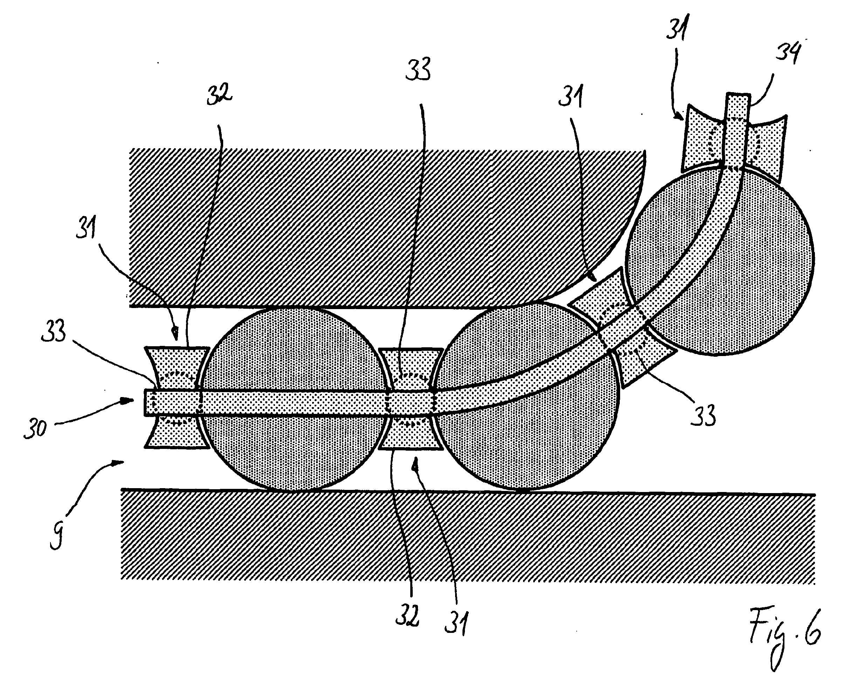

In dem in Fig. 6 gezeigten weiteren möglichen Ausführungsbeispiel ist ausschnittsweise ein Wälzkörperumlauf 9 gezeigt, der mit Trennelementen 31 versehen ist. Die Trennelemente 31 weisen jeweils neben einem sich ausschliesslich translatorisch bewegenden Distanzhalterelement 32 auch eine Distanzhalter-Kugel 33 auf. Anstelle einer Distanzhalter-Kugel 33 könnte auch ein Distanzhalter-Zylinder oder eine Distanzhalter-Rolle vorgesehen sein. Trennelemente 31 und die Distanzhalter-Drehkörper können die bereits zuvor genannten Werkstoffe aufweisen. Auch bei diesem Ausführungsbeispiel sind die Trennelemente Bestandteil einer Kugelkette 30 und damit über ein durch den gesamten Wälzkörperumlauf verlaufendes elastisches Ringelement 34 miteinander verbunden.

Die geometrische Form der Distanzhalterelemente 32 entspricht im Wesentlichen der Form der Trennelemente der Kugelkette aus Fig. 4 und Fig. 5, ähnlich einer doppelt konkav gekrümmten Linse. Jede Distanzhalter-Kugel 33 ist jeweils in einer Ausnehmung des Distanzhalterelements 32 frei drehbar angeordnet. Die Distanzhalter-Kugel 33 befindet sich hierbei so zwischen zwei Wälzkörpern, dass ihr Durchmesser mit den Durchmesserlinien der beiden Wälzkörper fluchtet (bezogen auf den geradlinigen Tragbereich des Wälzkörperumlaufs). Durch Kontakt der Distanzhalter-Kugel 33 mit zumindest einer der beiden sich drehenden Wälzkörper wird auch die Distanzhalter-Kugel 33 in Drehbewegung versetzt. Da beide Wälzkörper die jeweilige Distanzhalter-Kugel 33 in die gleiche Richtung antreiben, besteht auch dann zumindest überwiegend Rollreibung, wenn der Distanzhalter-Drehkörper mit beiden Wälzkörpern in Kontakt ist. Im dargestellten Ausführungsbeispiel drehen sämtliche Wälzkörper und Distanzhalter-Drehkörper des gezeigten Wälzkörperumlaufs um Rotationsachsen, die in einer gemeinsamen Ebene liegen. Vorliegend ist diese Ebene senkrecht zur Zeichenebene ausgerichtet und verläuft durch die Mittelpunkte der Wälzkörper.

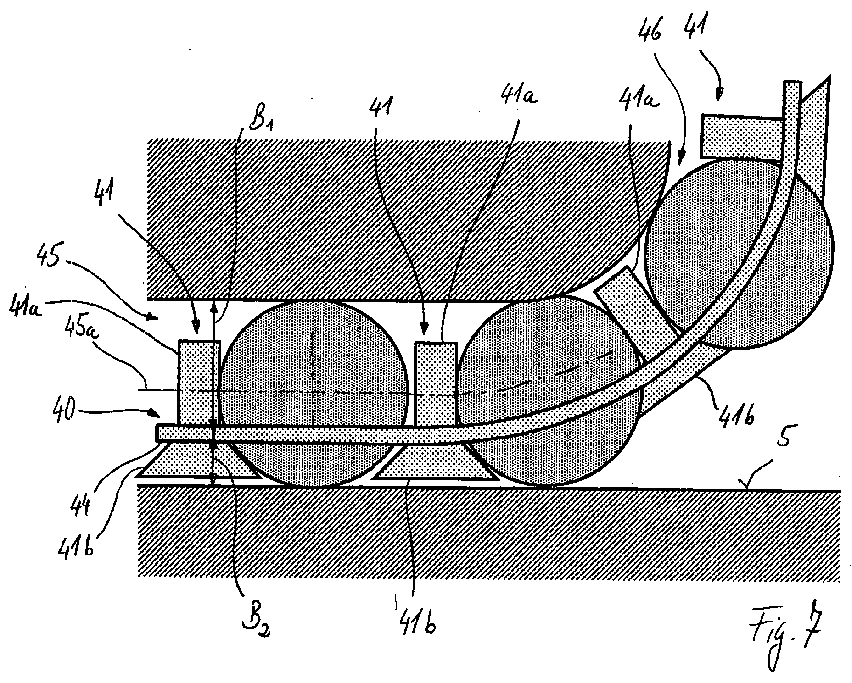

Im Unterschied zu dem in Fig. 6 gezeigten Ausführungsbeispiel verläuft bei der Kugelkette 40 aus Fig. 7 das Ringelement 44 in Bezug auf die Mittelpunkte der Kugeln 12 - und damit auch auf die Breite des Wälzkörperumlaufs - aussermittig, also exzentrisch. Bezogen auf eine mittige Umfangslinie 45a des Wälzkörperumlaufs 45 ist das Ringelement zur Lauffläche 5 der Schiene hin versetzt. Durch das Ringelement wird der Wälzkörperumlauf somit in einen Teilbereich mit einer grösseren Teilbreite B₁ und einen Teilbereich mit einer gegenüber B₁ kleinen Teilbreite B₂ unterteilt.

Die in Fig. 7 stark schematisiert dargestellten Trennelemente 41 weisen einen im Querschnitt schmäleren Abschnitt 41a auf, an den sich im Bereich des Ringelements ein sich kegelförmig verbreitender Abschnitt 41b anschliesst. Eine Längserstreckung der Trennelemente 41 verläuft quer zur Längsbewegungsrichtung der Wälzkörper.

In einer nicht gezeigten weiteren Ausgestaltung könnten die Trennelemente zusätzlich auch mit Distanzhalter-Kugeln versehen sein, wie sie in Fig. 6 gezeigt sind. Ebenso könnten die Trennelemente für den Kontakt mit den Wälzkörpern gekrümmte Flächen aufweisen, wie dies beispielsweise bei den in Fig. 5 gezeigten Trennelementen der Fall ist.

Durch die exzentrische Anordnung der Kugelkette kann erreicht werden, dass die Kugeln 12 im Bereich der Umlenkung 46 auf der Seite der grösseren Teilbreite B₁ des Wälzkörperumlaufs 45 zwischen ihren beiden jeweiligen Trennelementen geklemmt werden. Die schmäleren rechteckigen Abschnitte 41a von jeweils aufeinanderfolgenden Trennelementen werden aufgrund der Krümmung des Ringelements konisch zueinander geneigt. Hierdurch kommen die Abschnitte 41a in Anlage gegen die zwischen ihnen angeordnete Kugel und klemmen diese ein. Aufgrund der Klemmung erfahren die Kugeln eine Kraftkomponente in Richtung auf die kegelförmigen Abschnitte 41b, auf die sie somit gedrückt werden. Durch ihre äussere Form erzeugen die kegelförmigen Abschnitte eine Art Hintergreifung, und tragen somit zur Klemmung der Kugeln zwischen den Abschnitten 41a und 41b der Trennelemente 41 bei. Die Klemmwirkung kann somit aufgrund einer aussermittigen Anordnung des Ringelements und/oder einer geeigneten Formgebung der Trennelemente erreicht werden.

Ketten mit Klemmwirkung auf die Wälzkörper, wie sie in Fig. 7 gezeigt ist, haben auch unabhängig von der Wahl der Werkstoffe der Wälzkörper und der Schiene selbstständige Bedeutung.

### Bezugszeichenliste

- 1: Führungsachse
- 2: Schiene
- 3: Längsseite
- 4: Längsseite
- 5: Lauffläche
- 6: Lauffläche
- 7: Oberseite
- 8: Wagen
- 9: Wälzkörperumlauf
- 10: Tragfläche
- 11: Rücklaufkanal
- 12: Kugeln
- 13:
- 14:
- 15: Kontaktfläche
- 16: Schicht
- 17: Kern
- 18: Distanzhalter-Kugel
- 19: Kontaktfläche
- 20: Kugelkette
- 21: Trennelement
- 21a: konkave Fläche
- 22: Aufnahme
- 30: Kugelkette
- 31: Trennelement
- 32: Distanzhalterelement
- 33: Distanzhalter-Kugel
- 34: Ringelement
- 40: Kugelkette
- 41: Trennelement
- 41a: rechteckiger Abschnitt
- 41b: kegelförmiger Abschnitt
- 44: Ringelement
- 45: Wälzkörperumlauf
- 45a: Umfangslinie
- 46: Umlenkung

## Patentansprüche

1. Linearbewegungsführung zur translatorischen Relativbewegung von zu bewegenden Objekten entlang einer Führungsachse (1), umfassend
eine Schiene (2), an der zumindest eine sich parallel zur Führungsachse erstreckende Lauffläche (5, 6) vorgesehen ist,
einen Wagen (8), der mit zumindest einem Wälzkörperumlauf (9, 45) versehen ist, wobei der Wälzkörperumlauf (9, 45) als eine in sich geschlossene Strecke zur Zirkulation von Wälzkörpern ausgebildet ist, wobei
die im Wälzkörperumlauf (9, 45) des Wagens (8) angeordneten Wälzkörper bei einer Relativbewegung zwischen dem Wagen (8) und der Schiene (2) zur Übertragung von Belastungen einen Tragbereich des Wälzkörperumlaufs durchlaufen und
mehrere Trennelemente (18, 21, 31, 41) im Wälzkörperumlauf (9, 45) jeweils zwischen zwei Wälzkörpern zur Vermeidung eines Kontaktes zwischen den jeweiligen beiden Wälzkörpern angeordnet sind,
**dadurch gekennzeichnet, dass**
die Wälzkörper sowohl an der Lauffläche (5, 6) der Schiene (2) als auch an einer Tragfläche (10) des Wagens (8) zumindest im Wesentlichen frei von organischen Schmiermitteln anliegen,
zumindest einige der Wälzkörper (12) zwei oder mehr unterschiedliche Werkstoffe aufweisen, mit denen bei den Wälzkörpern ein Kern (17) sowie zur Ausbildung einer Kontaktfläche (15) des jeweiligen Wälzkörpers mit der Schiene eine den Kern (17) umgebende Zone (16) gebildet sind, wobei
sich der zumindest eine Werkstoff für die Kontaktflächen (15) der Wälzkörper von dem zumindest einen Werkstoff, mit dem die Lauffläche (5, 6) der Schiene (2) ausgebildet ist, und von dem zumindest einen Werkstoff, mit dem die jeweilige Tragfläche (10) des Wagens ausgebildet ist, unterscheidet und
der jeweilige Werkstoff der Lauffläche (5, 6) und der jeweilige Werkstoff der Tragfläche (10) jeweils ein Stahl ist und
die den jeweiligen Kern (17) umgebende Zone (16) einen Keramikwerkstoff oder einen Hartstoff und/oder ein Trockenschmiermittel aufweist.

2. Linearbewegungsführung nach Anspruch 1, **dadurch gekennzeichnet, dass** zumindest mehrere, vorzugsweise sämtliche, Trennelemente (21, 31, 41) miteinander verbunden sind.

3. Linearbewegungsführung nach Anspruch 1, **dadurch gekennzeichnet, dass** zumindest einige der Trennelemente (18, 21, 31, 41) jeweils lose zwischen zwei Wälzkörpern angeordnet sind.

4. Linearbewegungsführung nach einem der vorhergehenden Ansprüche, **dadurch gekennzeichnet, dass** der Kern (17) der Wälzkörper einen metallischen Werkstoff aufweist.

5. Linearbewegungsführung nach Anspruch 4, **dadurch gekennzeichnet, dass** der metallische Werkstoff ein Wälzlagerstahl ist.

6. Linearbewegungsführung nach Anspruch 1-5, **dadurch gekennzeichnet, dass** die umgebende Zone graphit- bzw. diamantartigen Kohlenstoff, Wolframkarbid, Titankarbid, Siliziumnitrid, eine Chromverbindung, Wolframdisulfid und/oder Molybdändisulfid aufweist.

7. Linearbewegungsführung nach einem der Ansprüche 1-6, **dadurch gekennzeichnet, dass** das Trockenschmiermittel MoS₂, WS₂, Graphit oder PTFE aufweist.

8. Linearbewegungsführung nach einem der vorhergehenden Ansprüche, **gekennzeichnet durch** zumindest ein Trennelement (21, 31, 41), das sich im Wesentlichen translatorisch mit den Wälzkörpern mitbewegt und einen frei drehbaren Distanzhalter-Drehkörper aufweist.

9. Linearbewegungsführung nach einem der vorhergehenden Ansprüche, **dadurch gekennzeichnet, dass** die Trennelemente (21, 31, 41) Bestandteil einer Kugelkette sind und mit einer Geometrie versehen sind, durch die im Bereich einer Umlenkung (46) des Wälzkörperumlaufs aufgrund einer Krümmung der Kugelkette eine Klemmung der Wälzkörper erfolgt.

## Claims

1. A linear movement guide for the translatory relative movement of objects to be moved along a guide axis (1), comprising
a rail (2), on which at least one running surface (5, 6) extending parallel to the guide axis is provided,
a carriage (8) which is provided with at least one loop of roller bodies (9, 45), whereby the loop of roller bodies (9, 45) is designed as a self-contained section for the circulation of roller bodies, wherein
the roller bodies disposed in the loop of roller bodies (9, 45) of the carriage (8) run through a carrying region of the loop of roller bodies during a relative movement between the carriage (8) and the rail (2) for the transfer of loads and
several separating elements (18, 21, 31, 41) are disposed in the loop of roller bodies (9, 45) in each case between two roller bodies in order to prevent a contact between the two respective roller bodies,
**characterised in that**
the roller bodies lie, at least essentially free of organic lubricants, both against the running surface (5, 6) of the rail (2) and against a carrying surface (10) of the carriage (8),
at least some of the roller bodies (12) comprise two or more different materials, with which there is formed in the roller bodies a core (17) as well as a zone (16) surrounding the core (17) for forming a contact surface (15) of the respective roller body with the rail, wherein
the at least one material for the contact surfaces (15) of the roller bodies is formed from the at least one material with which the running surface (5, 6) of the rail (2) is formed, and differs from the at least one material with which the respective carrying surface (10) of the carriage is formed, and
the respective material of the running surface (5, 6) and the respective material of the carrying surface (10) is in each case a steel and
the zone (16) surrounding the respective core (17) comprises a ceramic material or a hard material and/or a dry lubricant.

2. The linear movement guide according to claim 1, **characterised in that** at least several, preferably all, separating elements (21, 31, 41) are connected to one another.

3. The linear movement guide according to claim 1, **characterised in that** at least some of the separating elements (18, 21, 31, 41) are each disposed loosely between two roller bodies.

4. The linear movement guide according to any one of the preceding claims, **characterised in that** the core (17) of the roller bodies is made of a metallic material.

5. The linear movement guide according to claim 4, **characterised in that** the metallic material is a roller bearing steel.

6. The linear movement guide according to claim 1 - 5, **characterised in that** the surrounding zone comprises graphite-like or adamantine carbon, tungsten carbide, titanium carbide, silicon nitride, a chromium compound, tungsten disulphide and/or molybdenum disulphide.

7. The linear movement guide according to any one of claims 1 - 6, **characterised in that** the dry lubricant comprises MOS₂, WS₂, graphite or PTFE.

8. The linear movement guide according to any one of the preceding claims, **characterised by** at least one separating element (21, 31, 41), which essentially moves along with the roller bodies in a translatory manner and comprises a freely rotatable spacer rotary body.

9. The linear movement guide according to any one of the preceding claims, **characterised in that** the separating elements (21, 31, 41) are a component part of a ball chain and are provided with a geometry, as a result of which jamming of the roller bodies occurs in the region of a deflection (46) of the loop of roller bodies due to a curvature of the ball chain.

## Revendications

1. Guidage de mouvement linéaire pour mouvement relatif translatoire d'objets à déplacer le long d'un axe de guidage (1) comprenant
un rail (2) sur lequel est au moins prévu une surface de déplacement (5,6) s'étendant parallèlement à l'axe de guidage
un chariot (8) qui est muni au moins d'un passage d'organes de roulement (9,45) pour lequel le passage d'organes de roulement (9,45) est constitué comme une trajectoire se fermant pour la circulation d'organes de roulement, pour lequel
les organes de roulement (9,45) disposés dans le passage d'élément de roulement (9,45) du chariot (8) passent avec un mouvement relatif entre le chariot (8) et le rail (2) pour transmettre les contraintes par une zone de portance du passage d'organes de roulement et
plusieurs éléments de séparation (18,21,31,41) sont disposés dans le passage d'organes de roulements (9, 45) à chaque fois entre deux organes de roulement pour éviter un contact entre les deux organes de roulements respectifs,
**caractérisé en ce que** les organes de roulement reposent tant sur la surface de déplacement (5, 6) du rail (2) que sur une surface portante (10) du chariot (8)au moins pour l'essentiel sans lubrifiant organique,
**en ce qu'**au moins plusieurs organes de roulement (12)présentent deux matériaux différents ou plus avec lesquels pour les organes de roulement, sont formés un noyau (17) ainsi qu'une zone (16) entourant le noyau (17) pour former une surface de contact (15) de chaque élément de roulement respectif avec le rail,
pour lequel au moins un des matériaux pour les surfaces de contact (15) des organes de roulement se différencie d'au moins un matériau avec lequel est formé la surface de déplacement (5, 6) du rail (2)et d'au moins un des matériaux avec lequel la surface portante respective (10) du chariot est formée, et **en ce que** chaque matériau respectif de la surface de déplacement (5, 6) et chaque matériau respectif de la surface portante (10) est à chaque fois un acier et **en ce que** la zone (16) entourant le noyau respectif (17) comprend un matériau céramique ou un matériau dur et/ou un lubrifiant sec.

2. Guidage de mouvement linéaire selon la revendication 1 **caractérisé en ce qu'**au moins plusieurs, de préférence tous les éléments de séparation (21,31,41) sont associés entre eux.

3. Guidage de mouvement linéaire selon la revendication 1 **caractérisé en ce qu'**au moins plusieurs des éléments de séparation (18,21,31,41) sont à chaque fois disposés mobiles entre deux organes de roulement.

4. Guidage de mouvement linéaire selon une des revendications précédentes **caractérisé en ce que** le noyau (17) des organes de roulement présente un matériau métallique.

5. Guidage de mouvement linéaire selon la revendication 5 **caractérisé en ce que** le matériau métallique est un acier pour roulements à rouleaux.

6. Guidage de mouvement linéaire selon une des revendications 1 - 5 **caractérisé en ce que** la zone environnante présente du carbone de type graphitique ou au diamant, du carbure de tungstène, du carbure de titane, du nitrure de silicium, un composé de chrome, du bisulfure de tungstène et/ou du bisulfure de molybdène.

7. Guidage de mouvement linéaire selon une des revendications 1 - 6 **caractérisé en ce que** le lubrifiant sec comprend du MoS₂, WS₂, du graphite ou du PTFE.

8. Guidage de mouvement linéaire selon une des revendications précédentes **caractérisé en ce qu'**au moins un élément de séparation (21, 31, 41) se déplace pour l'essentiel de façon translatoire avec les organes de roulements et comprend des éléments rotatifs de type entretoises tournant librement.

9. Guidage de mouvement linéaire selon une des revendications précédentes **caractérisé en ce que** les éléments de séparation (21, 31, 41) sont l'élément composant d'une chaîne à billes et sont dotés d'une géométrie à travers laquelle il s'effectue un serrage des organes de roulement sur la base d'une courbure de la chaîne à billes dans le secteur d'une chicane (46) du passage d'organes de roulement.
